# EUROPEAN PATENT APPLICATION

(11) **EP 2 056 043 A1**
(43) Date of publication of application: **06.05.2009**
(21) Application number: 08740075.0
(22) Date of filing: 09.04.2008
(51) Int. Cl.: F25B 39/04, B60H 1/32, C09K 5/04, F25B 1/00

(54) **REFRIGERATING UNIT AND HEAT EXCHANGER USED FOR THE SAME**

(30) Priority: 11.04.2007 JP 2007103788; 01.04.2008 JP 2008094644
(71) Applicant: Calsonic Kansei Corporation, Saitama-shi Saitama 331-8501 (JP)
(72) Inventor: UJIIE, Chieko, Saitama-shi Saitama 331-8501 (JP); NODA, Yoshitoshi, Saitama-shi Saitama 331-8501 (JP)
(74) Representative: Köhler, Walter
(86) International application number: PCT/JP2008/056972
(87) International publication number: WO 2008/126848

(57) **Abstract**

To provide a refrigeration apparatus and a heat exchanger used for the refrigeration apparatus capable of exhibiting the cooling capacity of the same level even if an alternate refrigerant is used without largely changing constituent parts of a refrigeration cycle. In the refrigeration apparatus according to the rpesent invention, a ratio of the number of tubes of the supercooling section (17) to the total number of tubes (20) of the condensing section (16) and the supercooling section (17) is set such that cooling capacity obtained by an increased enthalpy difference with the same flow rate of refrigerant by the supercooling section (17) becomes equal to cooling capacity of a refrigeration cycle of the HFC134a refrigerant.

## Description

### Technical Field

The present invention relates to a refrigeration apparatus such as an air conditioner used for automobiles and vehicles, and more particularly, to a refrigeration apparatus using an alternate refrigerant in place of a conventional HFC134a refrigerant.

### Background Art

Conventionally, a condenser (subcool condenser) 2 used for a refrigeration cycle 1 of an air conditioner as shown in Figs. 19 and 20 is known (see Japanese Patent Application Laid-open No. 2000-146311, paragraphs 0015 to 0071 and Figs. 1 and 7 for example).

First, a configuration thereof will be described. The refrigeration cycle 1 is provided with a compressor 4 driven by an engine 3, and a discharged high temperature and high-pressure refrigerant is supplied to a condenser 2 through a refrigerant tube 5.

In the condenser 2, heat is exchanged between the refrigerant and outside air, the refrigerant is liquefied, and the liquefied refrigerant is supplied to an expansion valve 7 through a refrigerant tube 6 while keeping the high temperature and high pressure.

An opening degree of the expansion valve 7 can be changed based on a signal from a temperature sensitive cylinder 8.

The refrigerant is decompressed and expanded by the expansion valve 7 and atomized and supplied to an evaporator 9. The evaporator 9 is disposed in an air conditioner unit, heat is exchanged between the refrigerant and air to be conditioned, heat is taken away from air, the air is cooled, the refrigerant is evaporated in the evaporator 9 and the refrigerant becomes a gaseous refrigerant.

The low temperature and low pressure refrigerant evaporated in the evaporator 9 is circulated to the compressor 4 through a refrigerant tube 10.

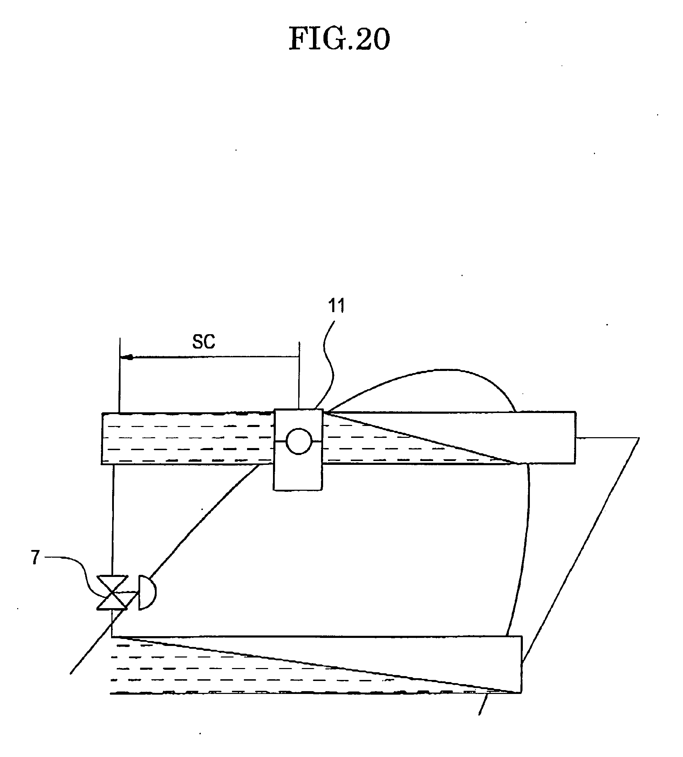

The conventional refrigeration cycle 1 is provided with a receiver tank 11 in an exit side refrigerant tube 6 of the condenser 2. In the receiver tank 11, the refrigerant is gas-liquid separated, and a portion 2a of the condenser 2 disposed downstream from the receiver tank 11 becomes a super cooler. As shown in Fig. 20, a placement point of the receiver tank 11 exists on a saturated liquid line of a Mollier diagram, and subsequent refrigerant is supercooled.

Next, effects of the conventional subcool condenser will be described.

According to the conventional condenser 2 constituted as described above, gas and liquid of a refrigerant are separated in the receiver tank 11, the refrigerant after the placement point of the receiver tank 11 is supercooled, and the refrigerant temperature can be reduced lower than the condensation temperature.

Therefore, refrigerant enthalpy reaching an entrance of the evaporator 9 can be lowered as shown with SC in Fig. 20, and an enthalpy difference can be increased and with this, the cooling capacity can be enhanced.

### Disclosure of the Invention

### Problem to be Solved by the Invention

According to the conventional subcool condenser constituted as described above, if an alternate refrigerant having relatively low latent heat of vaporization and relatively high density, e.g., 1234yf and [Fluid H] (trade name: Honeywell International Inc.) in which incombustible material is mixed in the 1234yf is used in place of the conventional HFC134a refrigerant for preventing global warming, the flow rate of a refrigerant must be increased in order to obtain the cooling capacity of the same level.

Thus, a pressure loss of the condenser 2 is increased and there is a fear that the cooling capacity is deteriorated.

To suppress the increase in the pressure loss, it is conceived to enlarge the tube on the low-pressure side and to reduce a pressure loss of the evaporator, but if the design of the flow path part is changed and the evaporator is newly developed, there is a problem that the production cost is increased.

Hence, it is an object of the present invention to provide a refrigeration apparatus and a heat exchanger used for the refrigeration apparatus capable of exhibiting the cooling capacity of the same level even if an alternate refrigerant is used without largely changing constituent parts of a refrigeration cycle.

### Means for Solving the Problem

To achieve the above object, an embodiment of the invention is characterized in that a refrigeration apparatus comprises a compressor which uses an alternate refrigerant instead of an HFC134a refrigerant and compresses the alternate refrigerant, a heat exchanger including a condensing section which condenses the compressed alternate refrigerant and a supercooling section which supercools the alternate refrigerant which passed through the condensing section, a decompressing device which decompresses and expands the condensed alternate refrigerant, an evaporator which evaporates the decompressed and expanded alternate refrigerant, and a liquid receiving device which is disposed between the condensing section and the supercooling section, which gas-liquid separates the alternate refrigerant which passed through the condensing section, which stores the alternate refrigerant, and which supplies the alternate refrigerant to the supercooling section, the condensing section and the supercooling section have flow path cross sectional areas which become internal resistances, the condensing section and the supercooling section include a plurality of tubes arranged side by side through which the alternate refrigerant flows, a ratio of the number of tubes of the supercooling section to the total number of tubes of the condensing section and the supercooling section is set such that cooling capacity obtained by an increased enthalpy difference with the same flow rate of refrigerant by the supercooling section becomes equal to cooling capacity of a refrigeration cycle of the HFC134a refrigerant.

An embodiment of the invention is characterized in that the ratio of the number of tubes of the supercooling section is 15 to 35% of the total number of tubes.

An embodiment of the invention is characterized in that a radiation area ratio of the supercooling section is in a range of 20 to 35% of the entire area.

An embodiment of the invention is characterized in that latent heat of vaporization of the alternate refrigerant is higher than that of the HFC134a refrigerant by 20% or higher, refrigerant liquid density of the alternate refrigerant is greater than that of the HFC134a refrigerant, and high pressure side (1500 kpa or higher) pressure of the compressor of the alternate refrigerant is lower than that of the HFC134a refrigerant if saturated temperature is the same.

An embodiment of the invention is characterized in that in the heat exchanger used for the refrigeration apparatus, the condensing section and the supercooling section have flow path cross sectional areas which become internal resistances, the condensing section and the supercooling section include a plurality of tubes arranged side by side through which the alternate refrigerant flows, radiation fins are provided between the tubes, a ratio of the condensing section and the supercooling section can be changed by a connection position of the liquid receiving device and with this, the heat exchanger can commonly be used as a heat exchanger using HFC134a refrigerant.

An embodiment of the invention is characterized in that a refrigeration apparatus comprises a compressor which uses an alternate refrigerant instead of an HFC134a refrigerant and compresses the alternate refrigerant, a heat exchanger including a condensing section which condenses the compressed alternate refrigerant and a supercooling section which supercools the alternate refrigerant which passed through the condensing section, a decompressing device which decompresses and expands the condensed alternate refrigerant, an evaporator which evaporates the decompressed and expanded alternate refrigerant, and a liquid receiving device which is disposed between the condensing section and the supercooling section, which gas-liquid separates the alternate refrigerant passing through the condensing section, which stores the alternate refrigerant, and which supplies the alternate refrigerant to the supercooling section, the condensing section and the supercooling section have flow path cross sectional areas which become internal resistances, the condensing section and the supercooling section include a plurality of tubes arranged side by side through which the alternate refrigerant flows, a ratio of the number of tubes of the supercooling section to the total number of tubes of the condensing section and the supercooling section is in a range of 15 to 35% of the total number of tubes.

### Brief Description of the Drawings

Fig. 1 is a schematic perspective view of a subcool condenser in a refrigeration apparatus and a heat exchanger used for the refrigeration apparatus of the best embodiment of the present invention.
Fig. 2 is a graph chart showing cooling capacity Qa - subcool °C and COP - subcool °C in comparison with alternate refrigerant and HFC134a refrigerant in the refrigeration apparatus and the heat exchanger used for the refrigeration apparatus of the embodiment.
Fig. 3 is a schematic refrigeration cycle circuit diagram for explaining the entire configuration in the refrigeration apparatus of the embodiment.
Fig. 4 is a vertical sectional view of a subcool condenser and a receiver tank used for the refrigeration apparatus of the embodiment.
Fig. 5 is a graph chart for explaining a relation between the number of lines of tubes, the entire area ratio and subcool in the subcool condenser used for the refrigeration apparatus of the embodiment.
Fig. 6 is a graph chart showing cooling capacity Qa - subcool °C and COP - subcool °C characteristics in a high load idling state of the subcool condenser provided in a vehicle in the refrigeration apparatus of the embodiment.
Fig. 7 is a graph chart showing pressure bar - subcool °C in the high load idling state of the subcool condenser provided in a vehicle in the refrigeration apparatus of the embodiment.
Fig. 8 is a graph chart showing alternate refrigerant weight flow rate Gr and volume flow rate Vr - subcool °C characteristics in the high load idling state of the subcool condenser provided in the vehicle in comparison with HFC134a refrigerant in the refrigeration apparatus of the embodiment.
Fig. 9 is a graph chart showing weight flow rate Gr and volume flow rate Vr - subcool °C characteristics of alternate refrigerant in the high load idling state of the subcool condenser provided in the vehicle in comparison with a pressure loss of HFC134a refrigerant in the refrigeration apparatus of embodiment.
Fig. 10 is a Mollier diagram for explaining a state where the optimal subcool cycle has larger enthalpy difference as compared with complete replacement cycle in comparison between a Mollier diagram of the complete replacement cycle shown with solid line and a Mollier diagram of the optimal subcool cycle shown with dashed line in the refrigeration apparatus and the heat exchanger used for the refrigeration apparatus of the embodiment.
Fig. 11 is a graph chart showing, in comparison, Qa- and COP in the high load idling state of the subcool condenser provided in the vehicle, a state of vehicle speed of 40 km/h, and a state of vehicle speed of 100 km/h in the refrigeration apparatus and the heat exchanger used in the refrigeration apparatus of the embodiment.
Fig. 12 is a table for comparing physical properties of Fluid H and 1234yf refrigerant which are alternate refrigerants and HFC134a refrigerant with each other in the refrigeration apparatus and the heat exchanger used for the refrigeration apparatus of the embodiment.
Fig. 13 is a graph chart showing pressure kPa - enthalpy kJ/kg characteristics for comparing Fluid H which is alternate refrigerant and HFC134a refrigerant with each other in the refrigeration apparatus and the heat exchanger used for the refrigeration apparatus of the embodiment.
Fig. 14 is a graph chart showing pressure kPa - temperature °C characteristics for comparing Fluid H which is alternate refrigerant and HFC134a refrigerant with each other in the refrigeration apparatus and the heat exchanger used for the refrigeration apparatus of the embodiment.
Fig. 15 is a graph chart showing refrigerant liquid density kg/m3 - temperature °C characteristics for comparing alternate refrigerant and HFC134a refrigerant with each other in the refrigeration apparatus and the heat exchanger used for the refrigeration apparatus of the embodiment.
Fig. 16 is a graph chart corresponding to Fig. 6 ,showing cooling capacity Qa - subcool °C and COP - subcool °C in the high load idling state of the subcool condenser provided in the vehicle in a refrigeration apparatus of an embodiment 1 of the embodiment.
Fig. 17 is a graph chart corresponding to Fig. 7 ,showing pressure bar - subcool °C in the high load idling state of the subcool condenser provided in the vehicle in the refrigeration apparatus of the embodiment 1 of the embodiment.

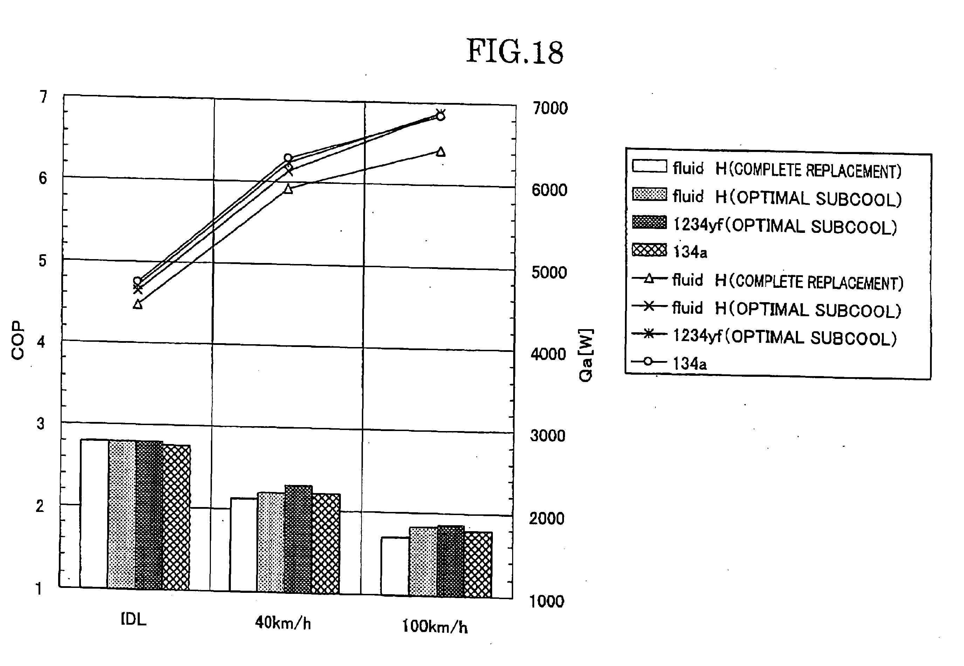

Fig. 18 is a graph chart corresponding to Fig. 11 'showing' in comparison, Qa - COP in the high load idling state of the subcool condenser provided in the vehicle, a state of vehicle speed of 40 km/h, and a state of vehicle speed of 100 km/h in the refrigeration apparatus of the embodiment 1 of the embodiment.

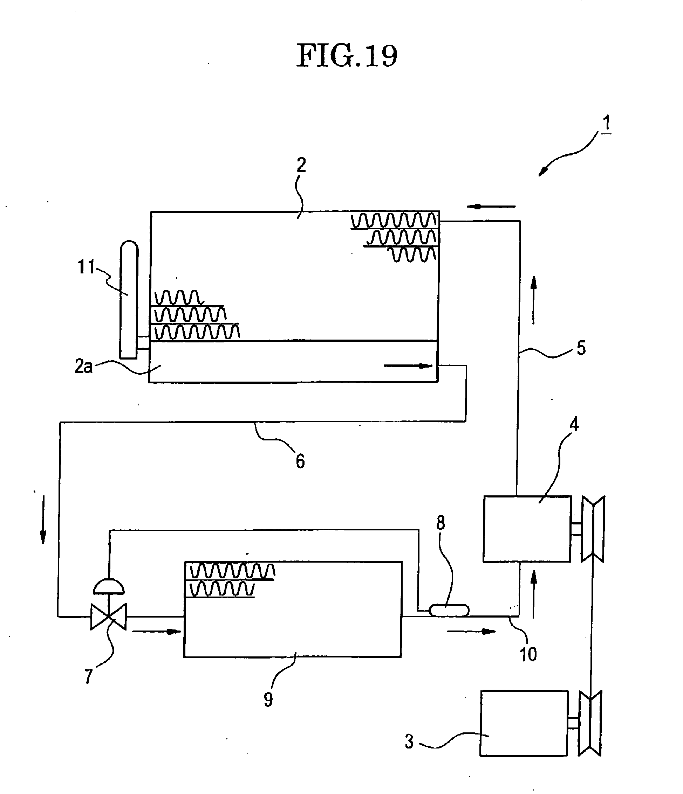

Fig. 19 is a schematic refrigeration cycle circuit diagram for explaining the entire configuration in a conventional refrigeration apparatus and a heat exchanger used for the refrigeration apparatus; and
Fig. 20 is a schematic Mollier diagram of the conventional heat exchanger in a phase state of a refrigerant.

### Best Mode for Carrying Out the Invention

Next, a refrigeration apparatus and a heat exchanger used for the refrigeration apparatus of the best mode for carrying out the invention will be described based on the drawings.

The same members as those of the conventional technique are designated with the same symbols.

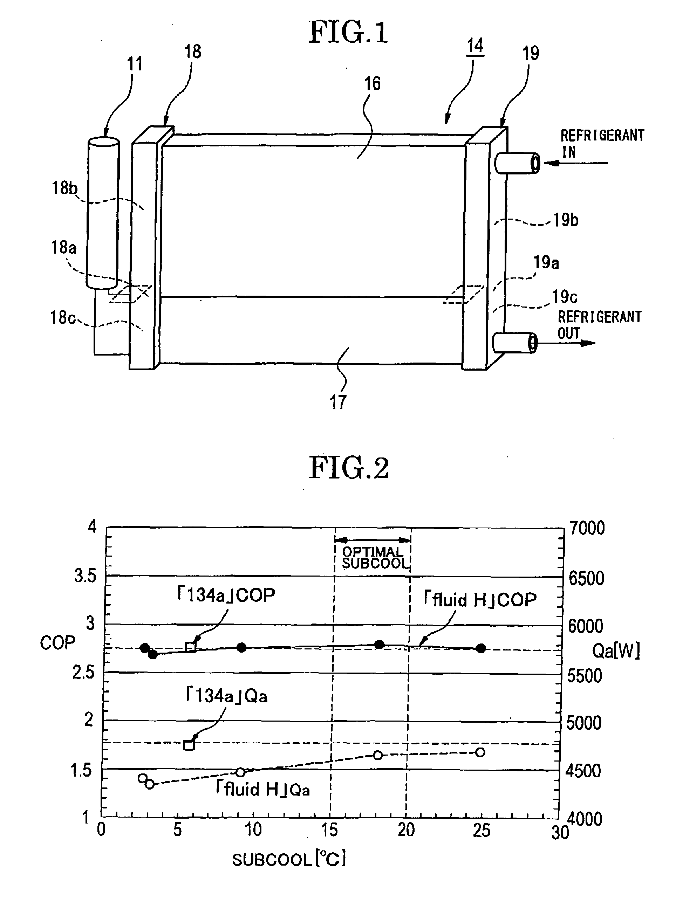

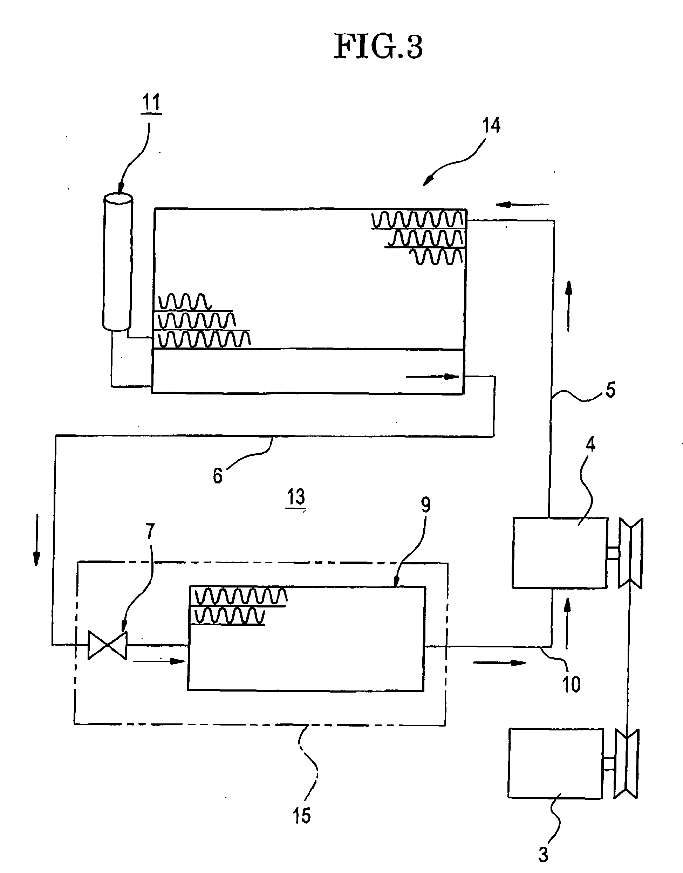

Figs. 1 to 3 show the refrigeration apparatus and the heat exchanger used for the refrigeration apparatus of the best mode of the invention.

First, the entire configuration will be described. A subcool condenser 14 as the refrigeration apparatus and the heat exchanger used for the refrigeration apparatus of the embodiment is applied to the refrigeration apparatus constituting a refrigeration cycle 13 of an air conditioner for a vehicle.

That is, the refrigeration cycle 13 constituting the refrigeration apparatus is provided with a compressor 4 which is driven by an engine 3, an alternate refrigerant in place of HFC134a refrigerant is discharged at high temperature and under high pressure, and is supplied to the subcool condenser 14 as a heat exchanger through a refrigerant tube 5. In this embodiment, for preventing global warming, an alternate refrigerant having relatively low latent heat of vaporization and relatively high density, e.g., [Fluid H] (trade name: Honeywell International Inc.) is used.

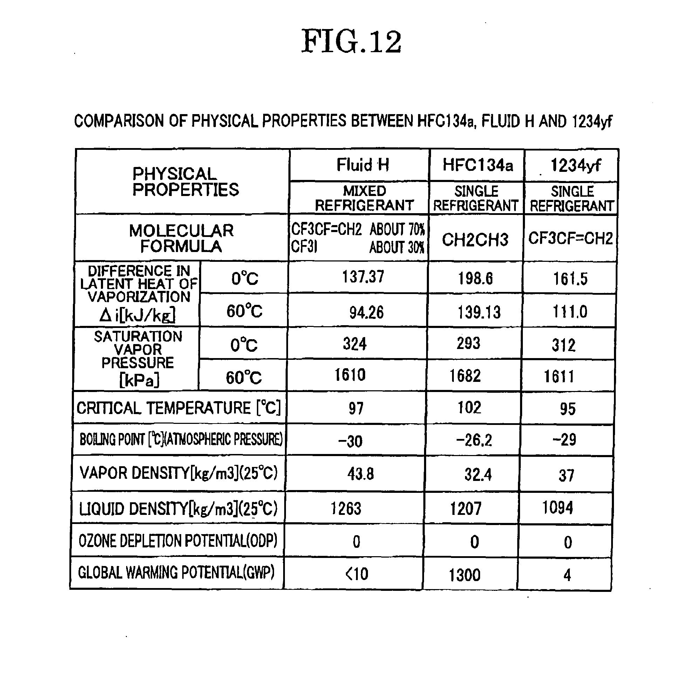

The [Fluid H] is an alternate refrigerant in place of the conventional HFC134a refrigerant, and is constituted as a mixed refrigerant in which an alternate refrigerant [1234yf] having relatively low latent heat of vaporization and relatively high density and incombustible [CF3I] are mixed at a ratio of about 7:3 as shown in Fig. 12.

In the subcool condenser 14, heat is exchanged between the refrigerant and outside air. The alternate refrigerant is liquefied, and the liquefied refrigerant is supplied to an expansion valve 7 through a refrigerant tube 6 while keeping the high temperature and high pressure.

The refrigerant is decompressed and expanded by the expansion valve 7 and atomized and supplied to an evaporator 9.

The evaporator 9 is disposed in an air conditioner unit 15, heat is exchanged between the refrigerant and air to be conditioned, heat is taken away from air, the air is cooled, the alternate refrigerant is evaporated in the evaporator 9 and the refrigerant becomes a gaseous alternate refrigerant.

The low temperature and low pressure refrigerant evaporated in the evaporator 9 is circulated to the compressor 4 through an alternate refrigerant tube 10.

Next, a configuration of the subcool condenser 14 will be described in detail.

As shown in Fig. 1, in the subcool condenser 14 of the embodiment, a condensing section 16 which condenses the alternate refrigerant compressed by the compressor 4, and a supercooling section 17 which supercools the alternate refrigerant which passed through the condensing section 16 are arranged side by side vertically. A pair of left and right vertical tank sections 18 and 19 is disposed on the left and right sides astride the condensing section 16 and the supercooling section 17.

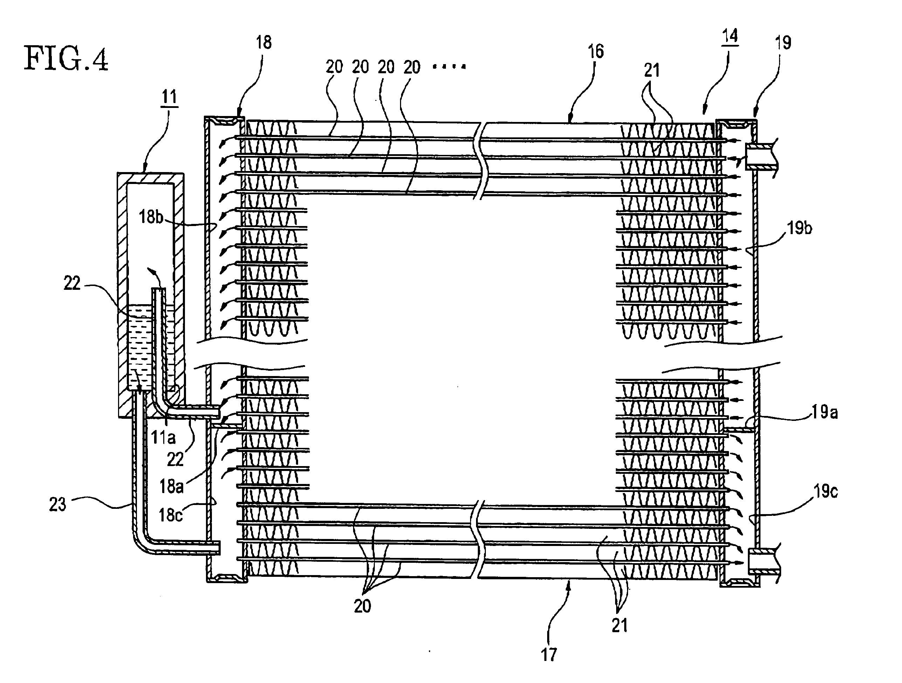

In the embodiment, as shown in Fig. 4, the condensing section 16 and the supercooling section 17 have substantially flat flow path cross section areas having equal internal resistances, and 41 metal tubes 20 as a plurality of tubes through which the alternate refrigerant flows are arranged.

A ratio of the number of metal tubes 20 of the supercooling section 17 to the number of entire metal tubes 20 is within 15 to 35%. In this embodiment, the number of metal tubes 20 is set to eight so that cooling capacity obtained by enthalpy difference increased by the supercooling section 17 and cooling capacity of the HFC134a refrigerant cycle become equal to each other with the same refrigerant flow rate.

In this embodiment, radiation fins 21 are provided between adjacent metal tubes 20. The supercooling section 17 is set such that a radiation area rate thereof of the entire area in which the condensing section 16 and the supercooling section 17 are added becomes 20 to 35%.

Further, in this embodiment, as shown in Fig. 4, the radiation fins 21 are provided between the adjacent metal tubes 20, the radiation fins 21 are also provided on an upper face of the uppermost metal tube 20 and on a lower face of the lowermost metal tube 20. With this, the heat exchanger can also be used as the conventional heat exchanger using HFC134a refrigerant.

The left vertical tank section 18 is provided with the receiver tank (liquid receiving section) 11, the refrigerant is gas-liquid separated in the receiver tank 11, the left vertical tank section 18 becomes the supercooling section 17 which performs the same function as the super cooler disposed downstream from the receiver tank 11, and subsequent refrigerant is supercooled.

That is, in the left and right vertical tank sections 18 and 19, horizontal division walls 18a and 19a are provided at locations separating the condensing section 16 and the supercooling section 17 from each other. Spaces in the left and right vertical tank sections 18 and 19 are vertically divided into upper tank spaces 18b and 19b and lower tank spaces 18c and 19c.

An upstream tube 22 is connected to the upper tank space 18b of the left vertical tank section 18 of the condensing section 16. The upstream tube 22 is projected into the receiver tank 11 by a given size such that a tip end thereof is oriented upward.

A downstream tube 23 is connected to a bottom face 11a of the receiver tank 11. The downstream tube 23 is in communication with the lower tank space 18c of the left vertical tank section 18.

Therefore, the alternate refrigerant is gas-liquid separated in the receiver tank 11 of the embodiment, the refrigerant is supplied into the metal tubes 20 which are disposed downstream from the receiver tank 11 and which are in communication with the lower tank space 18c, and it becomes the super cooler.

In this embodiment, the positions of the horizontal division walls 18a and 19a in the left and right vertical tank sections 18 and 19 are changed, connection positions are changed so that the upstream tube 22 and the downstream tube 23 of the receiver tank 11 are brought into communication with the upper tank space 18b and the lower tank space 18c. With this, the ratios of the condensing section 16 and the supercooling section 17 can be changed.

As shown in Fig. 12, the alternate refrigerant used in the embodiment has such characteristics that as compared with the HFC134a refrigerant, the latent heat of vaporization is lower than the HFC134a refrigerant by 20% or more, the refrigerant liquid density at 0°C to 25°C is higher, and the high pressure side (higher than 1500 kPa) pressure of the compressor becomes lower if the temperature is the same.

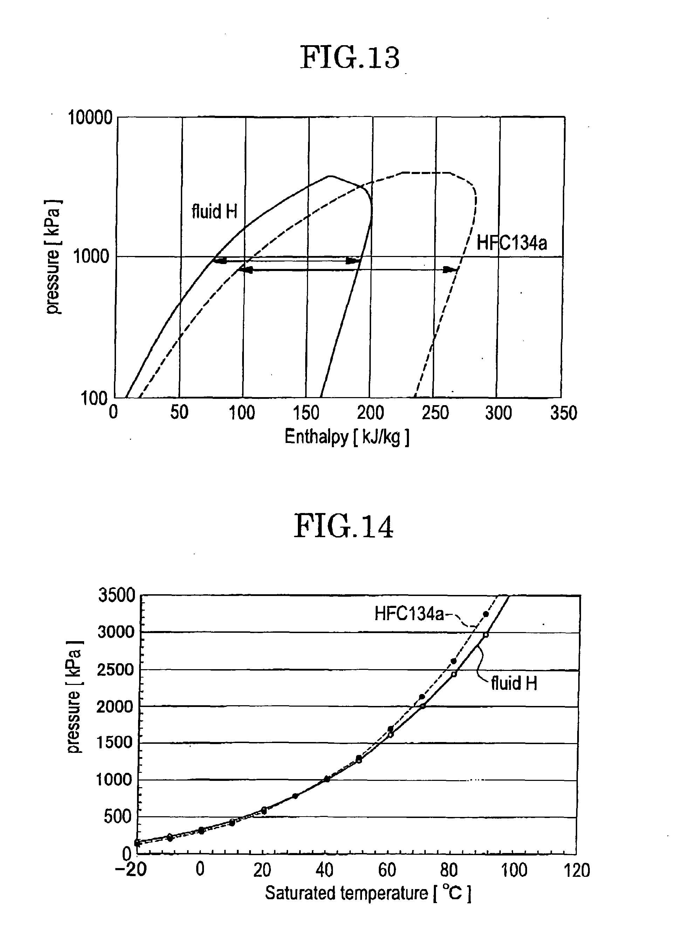

As shown in Fig. 13, it can be found that as compared with the HFC134a refrigerant, the alternate refrigerant has smaller two-phase region is smaller, and the latent heat effect is smaller.

As shown in Fig. 14, concerning the pressure kPa - temperature °C characteristics, a suction pressure is higher on the low pressure side as compared with the HFC134a refrigerant, and a discharging pressure is lower on the high pressure side as compared with the HFC134a refrigerant.

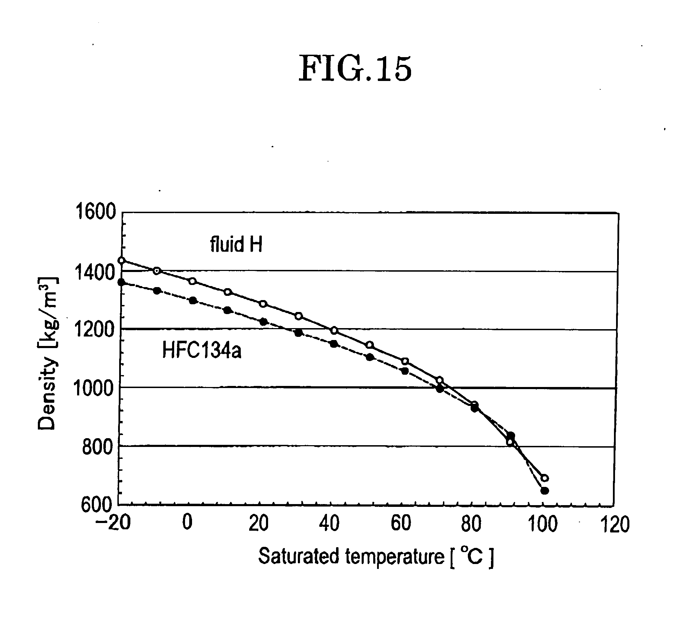

As shown in Fig. 15, density kg/m³ - temperature characteristics indicating the refrigerant density have such characteristics that liquid density is higher as compared with the HFC134a refrigerant.

Next, the effect of the refrigeration apparatus and the heat exchanger used for the refrigeration apparatus of the embodiment will be described.

In the refrigeration apparatus and the heat exchanger used for the refrigeration apparatus of the embodiment, the ratio of the number of the metal tubes 20 arranged side by side, of the supercooling section 17 to the number of the entire metal tubes 20 is set.

Therefore, the cooling capacity obtained by the enthalpy difference increased by the supercooling section 17 and the cooling capacity of the HFC134a refrigeration cycle become equal to each other.

Thus, the entire cooling capacity can exhibit sufficient cooling effect even if the latent heat of vaporization of the alternate refrigerant is relatively low.

Since sufficient cooling effect can be exhibited with the same refrigerant flow rate even if an alternate refrigerant whose density is relatively high is used, it is unnecessary to change the flow rate of refrigerant to be supplied depending upon the compressor 4 which compresses the alternate refrigerant, and it is unnecessary to take a pressure loss into account.

Thus, the metal tubes 20 and the compressor 4 which are conventionally used can be used as they are.

Therefore, it is possible to restrain the production cost from increasing, and to exhibit the same cooling capacity even if an alternate refrigerant is used, without largely changing configuration of a refrigeration cycle.

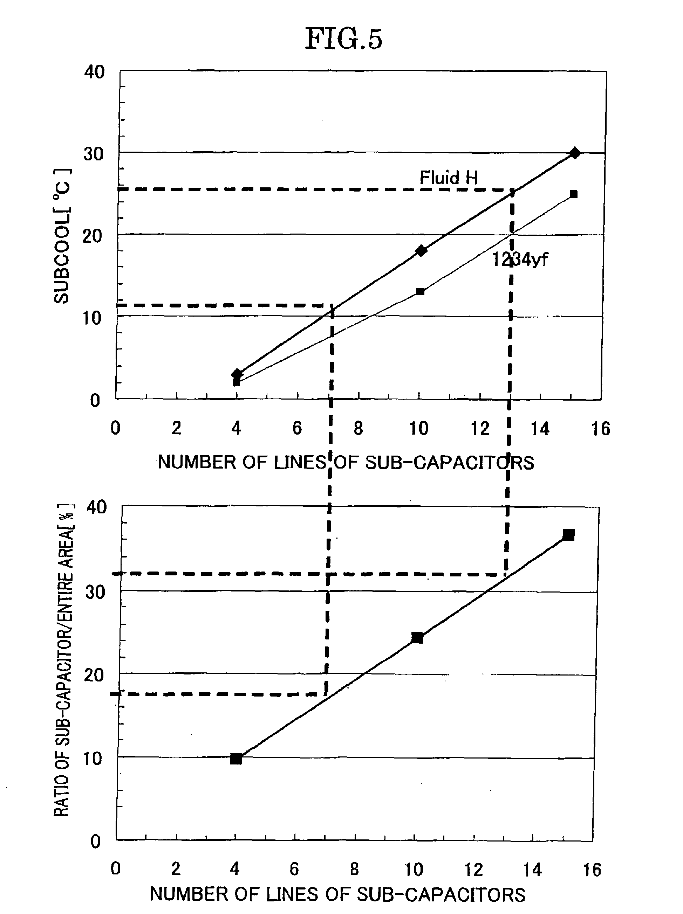

In this embodiment, the number of metal tubes 20 of the supercooling section 17 is set to eight so that the number of metal tubes 20 of the supercooling section 17 becomes about 15 to 35% of the number of entire metal tubes 20 as shown in Fig. 5.

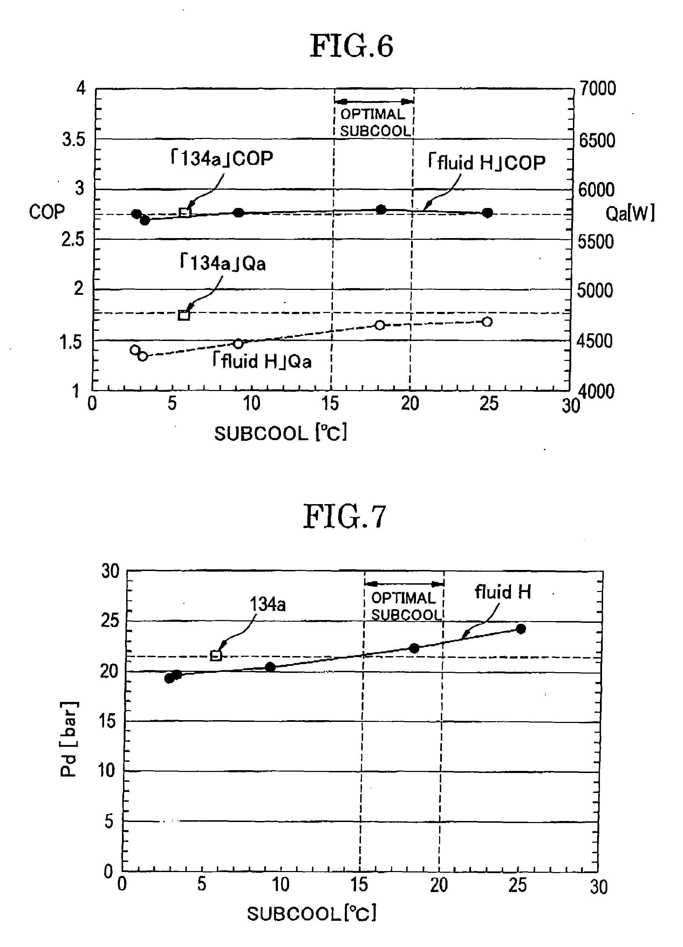

Thus, as shown in Figs. 6 and 7, the cooling capacity can be set such that it is equal to that of a refrigeration apparatus which uses HFC134a refrigerant without changing the flow rate of refrigerant in a range of subcool of about 15°C to 20°C.

Especially, in the embodiment, it can be determined from Fig. 6 that the optimal subcool is about subcool 20°C at which both COP and Qa (cooling capacity) become maximum. Therefore, vehicle applicability can be enhanced.

If the radiation area ratio of the supercooling section 17 is in a range of 20 to 35% of the entire area, subcool which is most excellent efficiency becomes about 10°C to 20°C, and preferably it can be set to about 20°C.

Especially, as shown in Fig. 7, it is found that the change in Pd (refrigerant pressure) with respect to the subcool is 1 to 1.5 bar higher in the alternate refrigerant than the HFC134a refrigerant at subcool 20°C, but this range is appropriate.

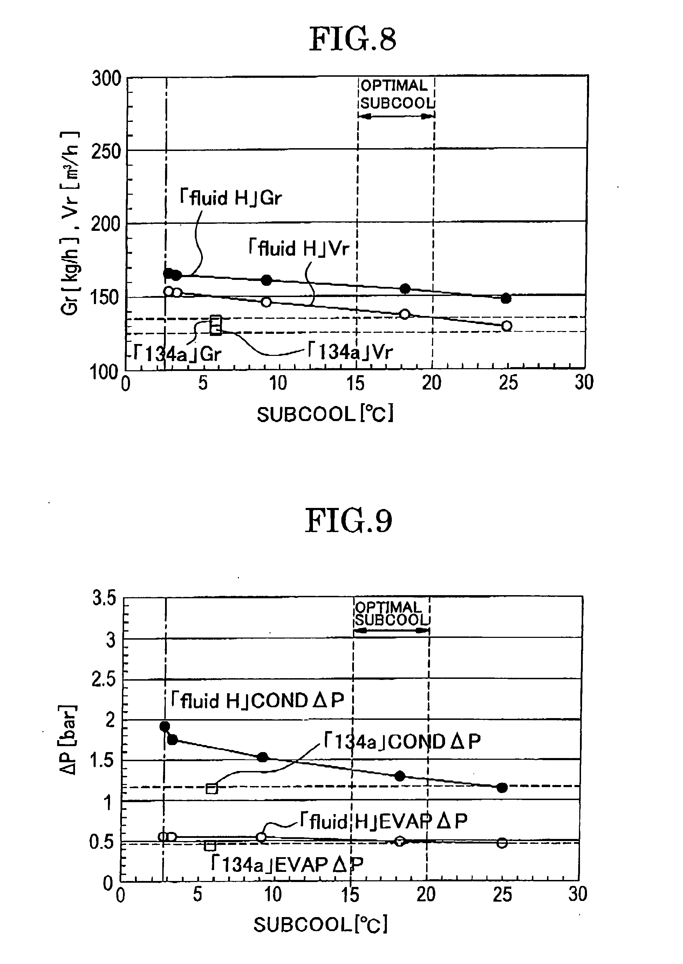

In Fig. 8, it is found that the weight flow rate Gr of the alternate refrigerant is higher than that of the HFC134a refrigerant at subcool 20°C, but the volume flow rate Vr is almost the same.

As shown in Fig. 9, if the volume flow rate Vr is the same as that of the HFC134a refrigerant, a pressure loss of the compressor 4 near the subcool 20°C is also almost the same.

Therefore, as shown in Fig. 2, it is possible to pull out high COP easily, and to exhibit maximum cooling capacity without changing the refrigerant flow rate at subcool within a range of about 15°C to 20°C.

The alternate refrigerant used as the refrigerant has characteristics that the latent heat of vaporization is lower than that of the HFC134a refrigerant by 20% or more, the refrigerant liquid density at 0°C is greater, and at the same temperature, the higher pressure side (1500 kPa or higher) pressure of the compressor 4 is lower.

Therefore, in the HFC 134a refrigerant, it is difficult to set high ratio (e.g., 30% or higher) of the supercooling section 17 which supercools, and the high pressure side pressure is low at the same temperature, even if the supercooling section 17 is set with high ratio, the pressure rise is suppressed.

Thus, it is possible to set the margin on the high-pressure side to a greater value and to reduce a pressure loss without largely changing the configuration of the refrigeration cycle.

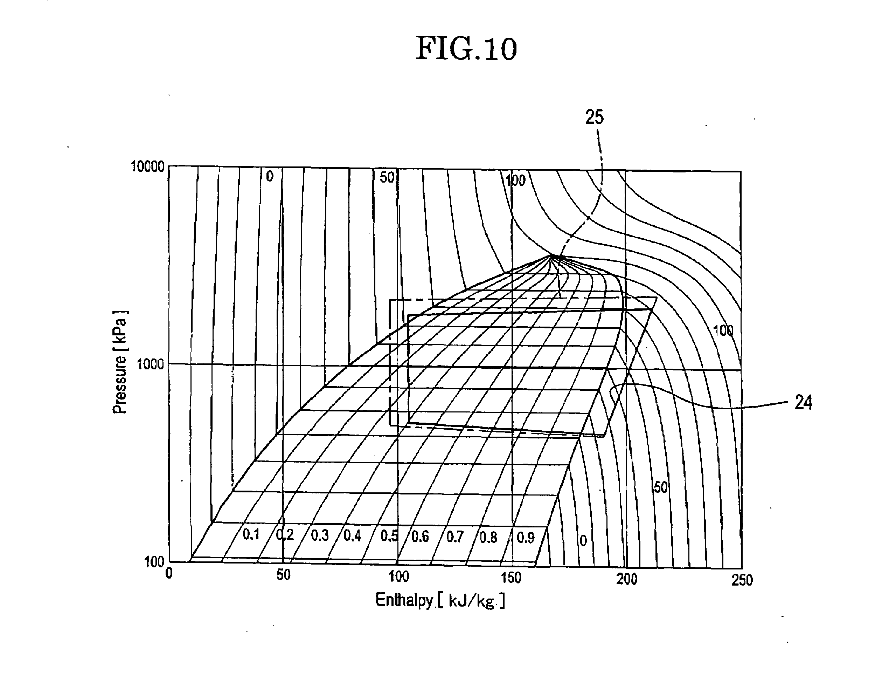

For example, as shown with solid line in Fig. 10, Mollier 25 near 20°C which is the optimal subcool has great enthalpy difference as compared with Mollier 24 of the complete replacement cycle, and it is possible to exhibit maximum cooling capacity by reducing the refrigerant flow rate and by pulling out high COP.

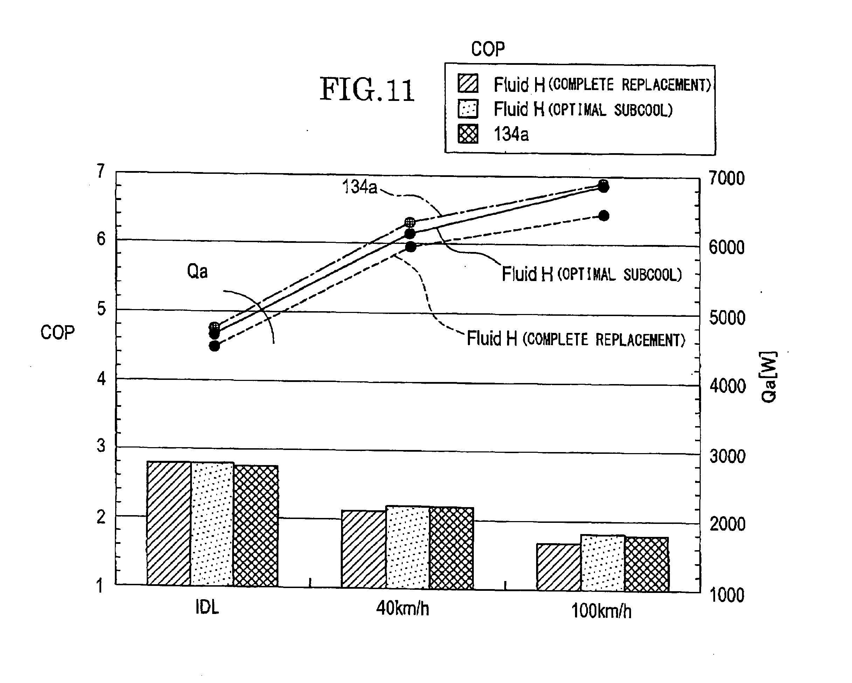

As shown in Fig. 11, even in a vehicle mounting state, in an idling state, a running state of 40 km/h and a running state of 100 km/h from left side in the drawing, 4 to 6% reduction in Qa and COP can be found in an alternate refrigerant of the complete replacement cycle as compared with HFC134a refrigerant is used.

However, at the optimal subcool where the subcool of about 20°C is given by the supercooling section 17, the refrigerant charging amount can be increased by about 1.25 times using the high pressure side margin and thus, the performance of Qa and COP of the almost the same level as that of the HFC134a refrigerant can be exhibited.

In this embodiment, as shown in Fig. 1, the horizontal division walls 18a and 19a provided in the left and right vertical tank sections 18 and 19 separate the condensing section 16 and the supercooling section 17. Spaces in the left and right vertical tank sections 18 and 19 are divided into the upper tank spaces 18b and 19b and the lower tank spaces 18c and 19c. The upstream tube 22 which projects into the receiver tank 11 shown in Fig. 4 by the given size such that its tip end is oriented upward is connected to the upper tank space 18b of the left vertical tank section 18. The downstream tube 23 extending from the receiver tank 11 is connected to the metal tubes 20 of the supercooling section 17 through the lower tank space 18c.

Therefore, the ratio of the condensing section 16 and the supercooling section 17 can be changed by the forming positions of the horizontal division walls 18a and 19a and the connection position of the receiver tank 11. Only with this, the heat exchanger of the conventional configuration in which the plurality of mental tubes 20 through which the alternate refrigerant flows are provided side by side, and the radiation fins 21 are provided between the adjacent metal tubes 20, and HFC134a refrigerant is used can be used as it is.

The conventionally used entire configuration in which the radiation fins 21 are provided between the adjacent metal tubes 20 is commonly used as the configuration using HFC134a refrigerant, and even if the alternate refrigerant is used, almost the same cooling capacity can be exhibited. Therefore, it is possible to suppress the increase of the production cost.

### Embodiment 1

Figs. 5, 16 and 17 mainly show characteristics when [1234yf] which is an alternate refrigerant having relatively low latent heat of vaporization and relatively high density is used as an alternate refrigerant as shown in Fig. 12 for the refrigeration apparatus and the heat exchanger used for the refrigeration apparatus of an example 1 the embodiment of the invention.

The same members as those of the refrigeration apparatus and the heat exchanger used for the refrigeration apparatus of the embodiment are designated with the same symbols.

In the embodiment 1, like the subcool condenser 14 shown in Fig. 4 of the embodiment, radiation fins 21 are provided between adjacent metal tubes 20, and the radiation area ratio of the supercooling section 17 is set to 20 to 35% of the entire area of the condensing section 16 and the supercooling section 17.

In this embodiment 1, as shown in Fig. 4, the radiation fins 21 are provided between the adjacent metal tubes 20, the radiation fins 21 are also provided on an upper face of the uppermost metal tube 20 and on a lower face of the lowermost metal tube 20. With this, the heat exchanger can also be used as the conventional heat exchanger using HFC134a refrigerant.

In this embodiment 1, the number of metal tubes 20 of the supercooling section 17 is set to eight so that the number of metal tubes 20 of the supercooling section 17 becomes about 15 to 35% of the number of entire metal tubes 20 as shown in Fig. 5.

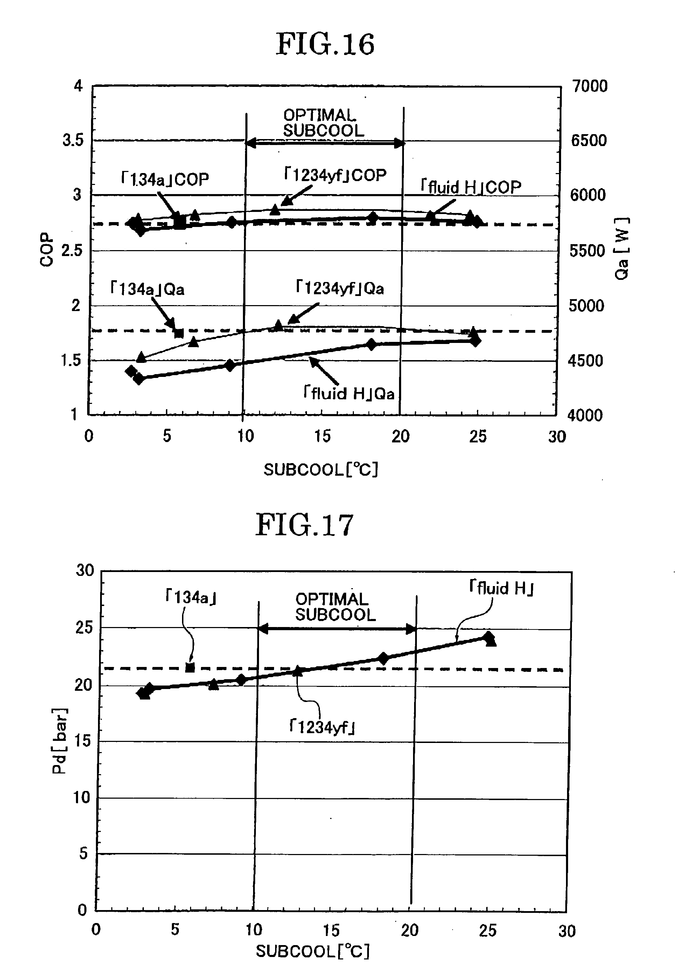

Thus, as shown in Figs. 16 and 17 comparing with Figs. 6 and 7 of the embodiment, the cooling capacity can be set such that it is equal to that of a refrigeration apparatus which uses HFC134a refrigerant without changing the flow rate of refrigerant in a range of subcool of about 15°C to 20°C using [1234yf] which is a single refrigerant.

Especially, in the embodiment 1, it can be determined from Fig. 6 that the optimal subcool is about subcool 20°C at which both COP and Qa (cooling capacity) become maximum. Therefore, vehicle applicability can be enhanced.

If the radiation area ratio of the supercooling section 17 is in a range of 20 to 35% of the entire area, subcool which is most excellent efficiency becomes about 10°C to 20°C, and preferably it can be set to about 20°C.

Especially, as shown in Fig. 17, it is found that the change in Pd (refrigerant pressure) with respect to the subcool is 1 to 1.5 bar higher in 1234yf which is the alternate refrigerant than the HFC134a refrigerant at subcool 20°C, but this range is appropriate.

The embodiment and the embodiment of the present invention have been described in detail with reference to the drawings, the invention is not limited to the embodiment and the embodiments, and design changes in a range not departing from the subject matter of the invention are included in the invention.

That is, in the embodiment and the embodiment, the [Fluid H] (trade name: Honeywell International Inc.) which is the mixed refrigerant or the [1234yf] which is the single refrigerant is used as the alternate refrigerant in place of HFC134a refrigerant, the invention is not limited to this, any materials such as a mixture of the [Fluid H] and [1234yf], other stable material, or a plurality of mixtures with incombustible material only if such materials have such characteristics that the latent heat of vaporization is lower by 20% or more, the refrigerant liquid density at 0°C is great, and high pressure side (1500 kpa or hither) pressure of the compressor is low at the same temperature. A mixture ratio, i.e., kinds, the amount, and details of combination of refrigerants are not limited.

The number of metal tubes allocated to the supercooling section 17 is not limited only if the condensing section 16 and the supercooling section 17 have flow path cross sectional areas which become equal internal resistances, and when the plurality of metal tubes 20 through which the alternate refrigerant flows are provided side by side, the ratio of the number of the metal tubes 20 of the supercooling section 17 to the number of the entire metal tubes 20 is in a range of about 6 to 13 with respect to 41. The obtained cooling capacity is set equal to the cooling capacity of the HFC134a refrigeration cycle by the increased enthalpy difference.

If the radiation area ratio of the supercooling section 17 is 20 to 35% of the entire area, the number, the shapes and materials of the metal tubes 20 and the radiation fins 21 of the condensing section 16 and the supercooling section 17 are not limited. Especially, the shapes, the number, material and a combination of the radiation fins 21 of the supercooling section 17, the left and right vertical tank sections 18 and 19 and the metal tubes are not especially limited.

According to the embodiment of the invention, the plurality of tubes are provided side by side, the rate of the number of tubes of the supercooling section to the number of the entire tubes is set. Therefore, with the same flow rate of refrigerant, the cooling capacity obtained by the increased enthalpy difference becomes equal to the cooling capacity of the HFC134a refrigeration cycle by the supercooling section.

Therefore, even if the latent heat of vaporization of the alternate refrigerant is relatively low, sufficient cooling effect can be exhibited.

Further, an alternate refrigerant having relatively high density is used, since sufficient cooling effect can be exhibited with the same flow rate of refrigerant, it is unnecessary to change the flow rate of refrigerant to be supplied depending upon a compressor which compresses the alternate refrigerant, and it is unnecessary to take a pressure loss into account. Thus, tubes and a compressor which are conventionally used can be used as they are.

Therefore, it is possible to prevent the production cost from increasing without largely changing the configuration of the refrigeration cycle, and even if an alternate refrigerant is used, the same cooling capacity can be exhibited.

According to the embodiment of the invention, the ratio of the number of tubes of the supercooling section is set to 15 to 35% of the total number of tubes.

Thus, the cooling capacity can be easily set to the same level as that of the refrigeration apparatus using HFC134a refrigerant without changing the flow rate of refrigeration. Thus, the vehicle applicability can be enhanced.

According to the embodiment of the invention, since the ratio of the radiation area of the supercooling section is in a range of 20 to 35% of the entire area, subcool of about 10°C to 20°C which is the most excellent efficiency can be obtained. Therefore, it is possible to easily pull out the high COP (ratio of cooling capacity/power), and to exhibit the maximum cooling capacity.

According to the embodiment of the invention, an alternate refrigerant used as the alternate refrigerant has such characteristics that latent heat of vaporization is 20% lower than that of the HFC134a refrigerant, the refrigerant liquid density at 0°C is great, and if the temperature is the same, the high pressure side (1500 kPa or higher) pressure of the compressor is lower.

Thus, in the HFC134a refrigerant, the high pressure side pressure is low at the same saturated temperature as compared with a case in which it is difficult to set high ratio (e.g., 30% or higher) of the supercooling section which supercools. Therefore, even if the supercooling section is set with high ratio, pressure rise can be restrained.

Therefore, it is possible to set the high-pressure side margin to a high value and to reduce a pressure loss without largely changing the configuration of the refrigeration cycle.

According to the embodiment of the invention, the ratio of the condensing section and the supercooling section can be changed by the forming positions of the liquid receiving device. Only with this, the heat exchanger of the conventional configuration in which the plurality of metal tubes through which the alternate refrigerant flows are provided side by side, and the radiation fins are provided between the adjacent metal tubes, and HFC134a refrigerant is used can be used as it is.

The conventionally used entire configuration in which the radiation fins are provided between the adjacent metal tubes is commonly used, and even if the alternate refrigerant is used, almost the same cooling capacity can be exhibited. Therefore, it is possible to suppress the increase of the production cost.

According to the embodiment of the invention, the plurality of tubes are provided side by side, and the ratio of the number of tubes of the supercooling section is set to 15 to 35% of the number of the entire tubes.

Thus, with the same flow rate of refrigerant, the cooling capacity obtained by the increased enthalpy difference can be enhanced by the supercooling section.

Therefore, the entire cooling capacity can exhibit sufficient cooling effect even when latent heat of vaporization of an alternate refrigerant is low.

Even if an alternate refrigerant having relatively high density is used, sufficient cooling effect can be exhibited with the same flow rate of refrigerant. Thus, it is unnecessary to change the flow rate of refrigerant to be supplied depending upon a compressor which compresses the alternate refrigerant, and it is unnecessary to take a pressure loss into account. Thus, tubes and a compressor which are conventionally used can be used as they are.

Therefore, it is possible to prevent the production cost from increasing without largely changing the configuration of the refrigeration cycle, and even if an alternate refrigerant is used, the same cooling capacity can be exhibited.
The present invention claims priority right based on Japanese Patent Application No. 2007-103788 filed on April 11, 2007 and Japanese Patent Application No. 2008-94644 filed on April 1, 2008. Disclosures and the like including drawings and claims of specification of these applications are incorporated herein by reference.

## Claims

1. A refrigeration apparatus comprising:
a compressor which uses an alternate refrigerant instead of an HFC134a refrigerant and compresses the alternate refrigerant;
a heat exchanger including a condensing section which condenses the compressed alternate refrigerant and a supercooling section which supercools the alternate refrigerant which passed through the condensing section;
a decompressing device which decompresses and expands the condensed alternate refrigerant;
an evaporator which evaporates the decompressed and expanded alternate refrigerant; and
a liquid receiving device which is disposed between the condensing section and the supercooling section, which gas-liquid separates the alternate refrigerant which passed through the condensing section, which stores the alternate refrigerant, and which supplies the alternate refrigerant to the supercooling section, wherein
the condensing section and the supercooling section have flow path cross sectional areas which become internal resistances, the condensing section and the supercooling section include a plurality of tubes arranged side by side through which the alternate refrigerant flows, a ratio of the number of tubes of the supercooling section to the total number of tubes of the condensing section and the supercooling section is set such that cooling capacity obtained by an increased enthalpy difference with the same flow rate of refrigerant by the supercooling section becomes equal to cooling capacity of a refrigeration cycle of the HFC134a refrigerant.

2. The refrigeration apparatus according to claim 1, wherein the ratio of the number of tubes of the supercooling section is 15 to 35% of the total number of tubes.

3. The refrigeration apparatus according to claim 1 or 2, wherein a radiation area ratio of the supercooling section is in a range of 20 to 35% of the entire area.

4. The refrigeration apparatus according to any one of claims 1 to 3, wherein latent heat of vaporization of the alternate refrigerant is higher than that of the HFC134a refrigerant by 20% or higher, refrigerant liquid density of the alternate refrigerant is greater than that of the HFC134a refrigerant, and high pressure side (1500 kPa or higher) pressure of the compressor of the alternate refrigerant is lower than that of the HFC134a refrigerant if saturated temperature is the same.

5. The heat exchanger used for the refrigeration apparatus according to any one of claims 1 to 4, wherein
the condensing section and the supercooling section have flow path cross sectional areas which become internal resistances, the condensing section and the supercooling section include a plurality of tubes arranged side by side through which the alternate refrigerant flows, radiation fins are provided between the tubes, a ratio of the condensing section and the supercooling section can be changed by a connection position of the liquid receiving device and with this, the heat exchanger is commonly used as a heat exchanger using HFC134a refrigerant.

6. A refrigeration apparatus comprising:
a compressor which uses an alternate refrigerant instead of an HFC134a refrigerant and compresses the alternate refrigerant;
a heat exchanger including a condensing section which condenses the compressed alternate refrigerant and a supercooling section which supercools the alternate refrigerant which passed through the condensing section;
a decompressing device which decompresses and expands the condensed alternate refrigerant;
an evaporator which evaporates the decompressed and expanded alternate refrigerant; and
a liquid receiving device which is disposed between the condensing section and the supercooling section, which gas-liquid separates the alternate refrigerant which passed through the condensing section, which stores the alternate refrigerant, and which supplies the alternate refrigerant to the supercooling section, wherein
the condensing section and the supercooling section have flow path cross sectional areas which become internal resistances, the condensing section and the supercooling section include a plurality of tubes arranged side by side through which the alternate refrigerant flows, a ratio of the number of tubes of the supercooling section to the total number of tubes of the condensing section and the supercooling section is in a range of 15 to 35% of the total number of tubes.
